# EUROPEAN PATENT APPLICATION

(11) **EP 4 667 782 A1**
(43) Date of publication of application: **24.12.2025**
(21) Application number: 24182645.2
(22) Date of filing: 17.06.2024
(51) Int. Cl.: F16H 57/03, B60B 35/16, F16H 57/037, F16H 57/04, F16H 57/02

(54) **AN AXLE HOUSING**

(71) Applicant: Meritor Heavy Vehicle Systems Cameri SpA, 28062 Cameri (NO) (IT)
(72) Inventor: Manjithaya, Guru Deepak R., 28062 Cameri (IT)
(74) Representative: Whitfield, Jack Stephen

(57) **Abstract**

An axle housing comprising: a differential portion configured to receive a differential; and a pair of elongate leg portions extending from opposite sides of the differential portion. Each leg portion comprises a free end configured for mounting a wheel end assembly to the axle housing. Each leg portion is configured to house a drive shaft for transmitting torque from the differential to the wheel end assembly. At least one of the leg portions comprises one or more ribs extending substantially parallel to a longitudinal axis of the leg portion.

## Description

### FIELD

The present teachings relate to an axle housing, a method of manufacturing an axle housing, and an axle.

### BACKGROUND

An axle housing houses components of one of a vehicle's axle assemblies. The axle housing helps to retain oil near critical components of the axle assembly (e.g. gears of a differential), so as to help maintain a minimum level of lubrication of those components.

Typically, a drive axle housing includes a differential portion and a pair of elongate leg portions extending from opposite sides of the differential portion. The differential portion is configured to receive a differential of the vehicle's drivetrain. Each leg portion includes a free end configured for mounting a wheel end assembly to the axle housing. Further, each leg portion is configured to house a drive shaft for transmitting torque from the differential to the wheel end assembly.

It is well known to form each leg portion as a rectangular box section with a generally constant profile along its length. However, such box sections typically require thick walls to ensure that the box section has sufficient stiffness to withstand the bending and torsional stresses it is subjected to in use, which significantly increases its mass. Moreover, as a result of the box section's generally constant profile, a large quantity of oil is needed to sufficiently fill the axle housing to ensure that the minimum level of lubrication is maintained.

The present teachings seek to overcome or at least mitigate one or more problems associated with the prior art.

### SUMMARY

According to a first aspect of the present teachings, there is provided an axle housing comprising: a differential portion configured to receive a differential; and a pair of elongate leg portions extending from opposite sides of the differential portion. Each leg portion comprises a free end configured for mounting a wheel end assembly to the axle housing. Each leg portion is configured to house a drive shaft for transmitting torque from the differential to the wheel end assembly. At least one of the leg portions comprises one or more ribs extending substantially parallel to a longitudinal axis of the leg portion.

Advantageously, the one or more ribs may help to increase the second moment of area of the leg portion, enabling the thickness of the walls of the leg portions to be reduced for a given bending strength, thus reducing the mass of the axle housing.

The one or more ribs may be arranged on a lower side of the leg portion, in an intended orientation of the axle housing for mounting to a vehicle.

Advantageously, the one or more ribs may help to increase the second moment of area of the lower side of the leg portion, which tends to be subjected to relatively higher tensile stresses, in use.

The at least one leg portion may comprise two or more ribs.

Advantageously, such a configuration may help to further increase the rigidity of the leg portion.

The two or more ribs may be spaced apart along a fore-aft direction of the leg portion.

Advantageously, such a configuration may help to further increase the rigidity of the leg portion.

The two or more ribs may be arranged side-by-side along said fore-aft direction.

The at least one leg portion may comprise a web joining two of the ribs.

Advantageously, such a configuration may help to further increase the rigidity of the leg portion, in particular in torsion.

The one or more ribs may extend along a majority or all of a length of the leg portion.

Advantageously, such a configuration may help to further increase the rigidity of the leg portion.

The at least one leg portion may comprise a tubular casing defining a void for receiving the drive shaft therein.

The one or more ribs and said tubular casing may be formed as a single monolithic piece of material (e.g. via a casting, forging, or stamping process).

Advantageously, such a configuration may help to further increase the rigidity and strength of the leg portion, and simplify manufacture of the axle housing.

A profile of the tubular casing may have a height which tapers in a direction away from the differential portion. A height of at least one of the one or more ribs with respect to the tubular casing may increase in said direction away from the differential portion.

Advantageously, such a configuration may help to reduce the mass of the axle housing whilst providing sufficient structural rigidity.

The tapering profile may extend along a majority or all of a length of the leg portion.

A cross-sectional area of the void may taper in the direction away from the differential portion.

Advantageously, such a configuration may help to reduce the quantity of oil required to fill the void so as to sufficiently lubricate components of the axle within the void.

A lower wall of the tubular casing may slope downwardly in a direction towards the differential portion, in an intended orientation of the axle housing for mounting to a vehicle.

Advantageously, such a sloping lower wall of the tubular casing may help oil drain to the differential portion from where it may be more easily removed.

An upper wall of the tubular casing may be non-parallel to the lower wall.

The upper wall may be substantially horizontal.

A lower side of the tubular casing may comprise a dam wall extending into the void for retaining oil in the void outboard of the dam wall, in an intended orientation of the axle housing for mounting to a vehicle.

Advantageously, the dam wall may help to retain oil towards a free end of the leg portion where components requiring lubrication may be mounted.

The dam wall may be adjacent the free end of the leg portion.

The one or more ribs may be substantially symmetrical about a plane running parallel to the longitudinal axis of the leg portion.

Advantageously, such a configuration may help to increase the rigidity of the leg portion.

The plane may be substantially vertical, in an intended orientation of the axle housing for mounting to a vehicle.

According to a second aspect of the present teachings, there is provided a method of manufacturing the axle housing according to the first aspect. The at least one leg portion of the axle housing comprises a tubular casing defining a void for receiving the drive shaft therein. The method comprises:
forming the tubular casing and the one or more ribs as a single monolithic piece of material via a casting or stamping process.

According to a third aspect of the present teachings, there is provided an axle comprising the axle housing according to the first aspect.

The axle may be a drive steer axle or a rigid drive axle.

### BRIEF DESCRIPTION OF THE DRAWINGS

Embodiments are now disclosed by way of example only with reference to the drawings, in which:
Figure 1 is an upper isometric view of an axle according to an embodiment, in an intended orientation for mounting to a vehicle;
Figure 2 is a view along section A-A shown in Figure 1;
Figure 3 is a lower isometric view of the axle shown in Figure 1;
Figure 4 is a view along section B-B shown in Figure 1;
Figure 5 is a magnified view of the left-hand-side of Figure 2;
Figure 6 is a lower isometric view of an axle according to an embodiment; and
Figure 7 is a view along section C-C shown in Figure 6.

### DETAILED DESCRIPTION OF EMBODIMENT(S)

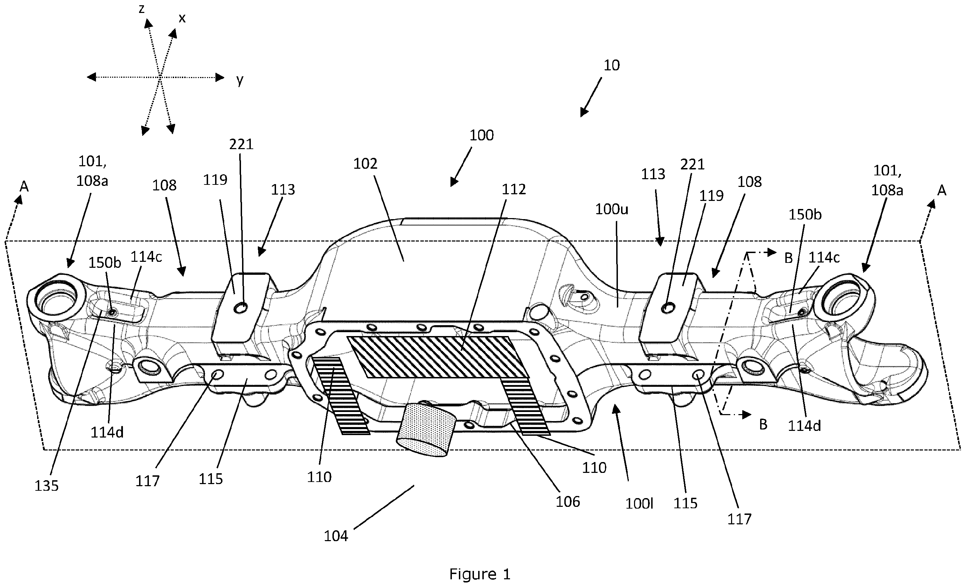

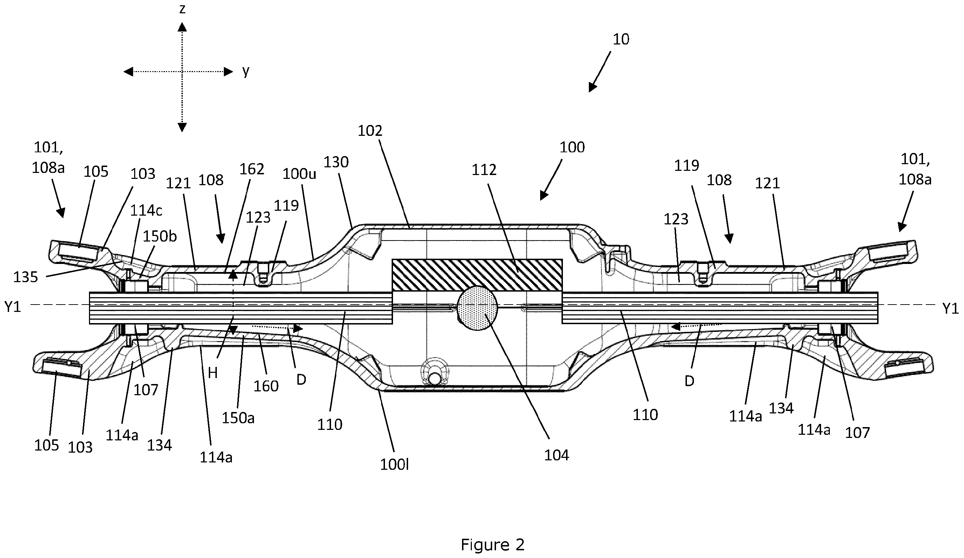

Figures 1 and 2 show an axle 10 for a vehicle (not shown) according to an embodiment. Figure 2 shows a view along section A-A shown in Figure 1. Figures 1 and 2 show views of the axle 10 in an intended orientation for mounting to a vehicle. In the following, references to "upper", "lower", "horizontal" and "vertical" are with respect to this intended orientation. Figure 1 further shows a cartesian coordinate system with axis x representing a fore-aft direction, axis y representing a transverse direction, and axis z representing a vertical direction, of a vehicle to which the axle 10 is mounted.

The axle 10 is a drive steer axle. The axle 10 may be of the type utilised in heavy duty on- or off-highway vehicles, such as an axle of a truck, bus, agricultural vehicle, mining equipment, military transport or weaponry vehicle, or cargo loading equipment for land, air, or marine vessels, for example. The vehicle may include a trailer for transporting cargo in one or more embodiments.

The axle 10 includes an axle housing 100, a pair of drive shafts 110 (i.e. half-shafts), and a differential 112. The drive shafts 110 and differential 112 are shown schematically in Figures 1 and 2. The axle housing 100 has an upper side 100u and a lower side 100l.

The axle housing 100 is elongate and extends predominantly along a longitudinal axis Y1 shown in Figure 2. The longitudinal axis Y1 is substantially parallel to the transverse direction (y).

The axle housing 100 includes a differential portion 102 configured to receive the differential 112, and a propeller shaft 104 (shown schematically in Figures 1 and 2) of the vehicle's drivetrain. In the illustrated embodiment, the differential portion 102 includes an aperture 106 through which the propeller shaft 104 extends into the differential portion 102. A cover (not shown) is removably mounted to the periphery of the aperture 106, such that the propeller shaft 104 extends through the cover. The cover is configured to inhibit oil leaking from an internal void of the axle housing 100 via the aperture 106. In other embodiments (not shown) an electric machine may be coupled to the axle housing 100 to provide propulsion adjacent to the axle, rather than from a prime mover, such as an internal combustion engine, remotely therefrom via the propeller shaft 104.

The axle housing 100 includes a pair of elongate leg portions 108 extending from opposite sides of the differential portion 102. In the illustrated embodiment, the leg portions 108 are substantially identical, but may differ in alternative embodiments.

Each leg portion 108 has a longitudinal axis. In the illustrated embodiment, the longitudinal axis of each leg portion is aligned with the longitudinal axis Y1 as shown in Figure 2. Each leg portion 108 houses one of the drive shafts 110. In the illustrated embodiment, each drive shaft 110 is coupled to the propeller shaft 104 via the differential 112, such that torque is transmitted from the propeller shaft 104 to the drive shafts 110 via the differential 112.

The differential 112 is housed within the differential portion 102. The differential portion 102 has a greater height in the vertical direction (z) and length in the fore-aft direction (x) relative to the leg portions 108 so as to accommodate the differential 112.

Each leg portion 108 includes a free end 108a configured for mounting a wheel end assembly (not shown) thereto. Each wheel end assembly may be configured to rotatably support a vehicle wheel that may support a tire. In addition, the wheel end assembly may include one or more components that may facilitate braking of the wheel or changing the direction of travel of the vehicle. In the illustrated embodiment, each free end 108a includes a steering knuckle mounting arrangement 101 at its free ends, for mounting a steering knuckle to the axle housing 100. Each steering knuckle mounting arrangement 101 includes a pair of opposed arms 103, each arm 103 including a hole 105 for receiving a kingpin of the steering knuckle. The drive shaft 110 housed in each leg portion 108 may transmit torque to the wheel end assembly mounted to the free end 108a of the leg portion 108 via a universal joint or the like to permit simultaneous drive and steering. The universal joint may be located in a space defined between the arms 103.

The free end 108a of each leg portion 108 is configured to rotatably support a distal end of the drive shaft 110 housed therein. In the illustrated embodiment, each free end 108a includes a bearing seat 107 to mount a suitable rolling element bearing (not shown) or the like for this purpose.

The axle housing 100 includes a vehicle mounting arrangement 113 for mounting the axle housing 100 to a vehicle. In the illustrated embodiment, the vehicle mounting arrangement 113 includes a pair of mounting brackets 115 on each leg portion 108. Each bracket 115 includes one or more apertures 117 for receiving fasteners such as bolts (e.g. U-bolts, not shown), for mounting the axle housing 100 to the vehicle. In some embodiments, the axle housing 100 may be mounted to a vehicle's suspension via the mounting arrangement 113.

The vehicle mounting arrangement 113 includes a mounting platform 119 on the upper side 100u of each leg portion 108 for abutting against the vehicle (e.g. the suspension thereof) to which it is mounted. Each mounting platform 119 is aligned with the pair of mounting brackets 115. In the illustrated embodiment, each mounting platform 119 includes a hole 221 for receiving a fastener, for mounting the axle housing 100 to the vehicle.

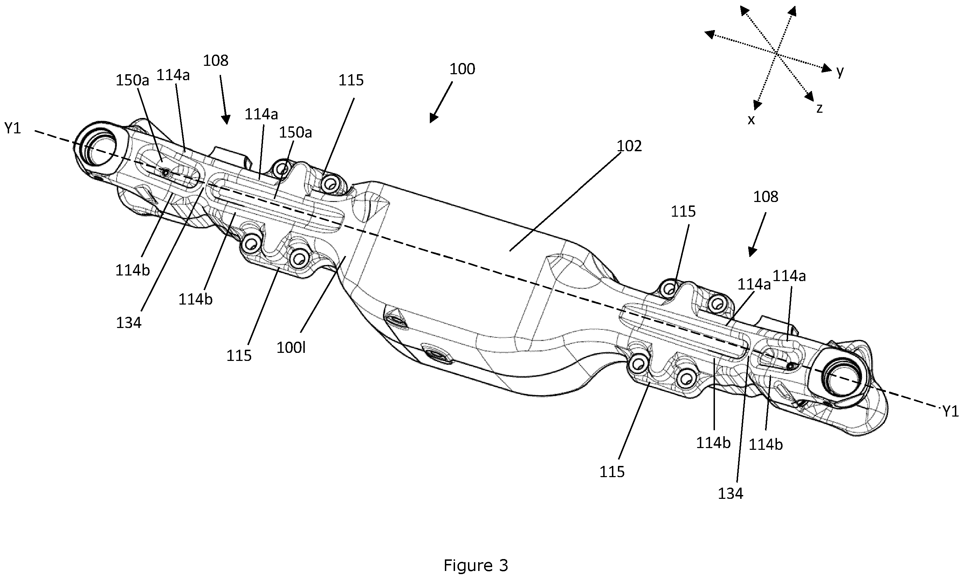

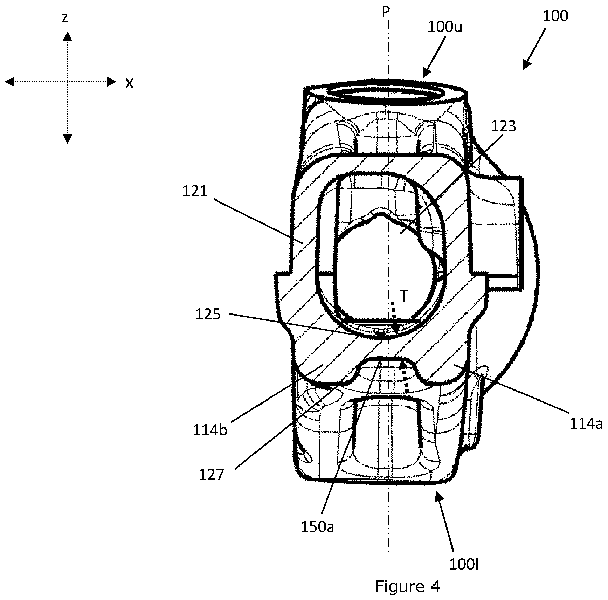

With further reference to Figures 3 and 4, which show the lower side 100l of the axle housing 100 and a view along section B-B in Figure 1 respectively, each leg portion 108 includes a tubular casing 121 defining a void 123 in which the corresponding drive shaft 110 is received. Each leg portion 108 includes four ribs 114a, 114b, 114c, 114d. In the illustrated embodiment, the ribs 114a-d and the tubular casing 121 are formed as a single monolithic piece of material (e.g. via a casting, forging, or stamping process, for example from a metal such as steel) for each leg portion 108. In alternative embodiments (not shown), the ribs 114a-d may be formed separately to the tubular casing 121, and mounted thereto (e.g. via welding).

Each rib 114a-d extends substantially parallel to the longitudinal axis Y1. Advantageously, the ribs 114a-d help to increase the second moment of area, and thus rigidity, of the leg portions 108, enabling the thickness of the walls of the tubular casing 121 to be reduced, resulting in a reduction in overall mass of the axle housing 100. In alternative embodiments (not shown), at least one of the leg portions 108 may include one or more, two or more, three or more, or more than four ribs 114a-d. In such alternative embodiments, one of the leg portions 108 may not include any ribs 114a-d.

In the illustrated embodiment, each rib 114a-d extends vertically outwards from the tubular casing 121; i.e. along the z-axis.

The leg portions 108 have a wall thickness T shown in Figure 4 between internal and external surfaces thereof. Provision of the ribs 114a-d enables the average wall thickness T of the leg portions 108 to be reduced relative to a conventional box-section type leg portion, without compromising structural integrity. As such, provision of the ribs 114a-d enables the mass of the leg portions 108 to be reduced.

The ribs 114a-d on each leg portion 108 include a first rib 114a, a second rib 114b, a third rib 114c, and a fourth rib 114d. In the illustrated embodiment, the first and second ribs 114a,b are arranged on the lower sides 100l of the leg portions 108, which tend to be subjected to higher tensile stresses relative to the upper side 100u in use, and thus benefit most from the increase in stiffness. The third and fourth ribs 114c,d are arranged on the upper side 100l of the leg portions 108.

The first and second ribs 114a, and the third and fourth ribs 114c, 114d, are arranged side-by-side and spaced apart along the fore-aft direction (x). In alternative embodiments (not shown), the ribs 114a-d may have any suitable arrangement.

As shown in Figures 3 and 4, the first and second ribs 114a, 114b are separated along the fore-aft direction (x) by a first wall 150a of the tubular casing 121 having a thickness T less than a thickness of the ribs 114a, 114b. Similarly, the third and fourth ribs 114c, 114d are separated along the fore-aft direction (x) by a second wall 150b of the tubular casing 121 having a thickness T less than a thickness of the ribs 114c, 114d.

Each leg portion 108 includes a web 134 joining the first and second ribs 114a,b partway along their length. Each web 134 extends predominantly perpendicularly to the corresponding ribs 114a,b (i.e. along the fore-aft direction (x) in the illustrated embodiment). The webs 134 further help to improve the torsional stiffness of the leg portions 108, and may be formed with the tubular casing 121 as a single monolithic piece of material like the ribs 114a-d.

As shown in Figure 3, the first and second ribs 114a,b extend along a majority of the length of each leg portion 108, where said length is defined between a differential portion end 130 and the free end 108a of the leg portion 108.

In alternative embodiments (not shown), the arrangement of ribs 114a-d may extend along all of the length of each leg portion 108.

As shown in Figure 1, the third and fourth ribs 114c,d extend along a minority of the length of each leg portion 108, but may extend along a majority of the length in alternative embodiments. The third and fourth ribs 114c,d are adjacent the free end 108a of each leg portion 108.

In the illustrated embodiment, each leg portion 108 includes a cavity 135 formed by the third and fourth ribs 114c, 114d and the second wall 150b. To inhibit water retention in each cavity 135, which could cause corrosion of the axle housing 100, the cavity 135 may be covered filled or covered with a waterproof material (e.g. epoxy). Alternatively, one or both of the ribs 114c, 114d or the second wall 150b (provided it can drain external to the void 123) may be provided with a drainage hole for draining water from the cavity 135.

As shown in Figure 4, the ribs 114 are substantially symmetrical about a plane P running parallel to the longitudinal axis Y1. In the illustrated embodiment, the plane P is substantially vertical. In alternative embodiments (not shown), the ribs 114 may be asymmetric.

In the illustrated embodiment, the ribs 114a-d, and where they join to the tubular casing 121, have a continuous curved outer profile, helping to minimise stress concentrations therein.

As shown in Figure 2, a profile of the tubular casing 121 of each leg portion 108 has an internal vertical height H which varies along the longitudinal axis Y1. In the present embodiment, the height H tapers along the longitudinal axis Y1 in a direction away from the differential portion 102 (i.e. the height H reduces with increasing distance along the longitudinal axis Y1 away from the differential portion 102). Advantageously, such a configuration may help to reduce the mass of the axle housing 100.

In the illustrated embodiment, the height of the ribs 114a-d with respect to the tubular casing 121 increases along the longitudinal axis Y1 in the direction away from the differential portion 102. Advantageously, such a configuration of the ribs 114a-d helps to counteract the reduction in second moment of area caused by tapering of the height H of the tubular casing 121, so as to ensure sufficient structural rigidity of the leg portions 108. In alternative embodiments (not shown), the height of only one or more of the ribs 114a-d with respect to the tubular casing 121 may increase in the direction away from the differential portion 102.

In the illustrated embodiment, the tapering profile extends along the majority of the length of each leg portion 108. In alternative embodiments, said tapering profile may instead extend along all of the length of each leg portion 108. In some embodiments, the height H may taper from the differential portion end 130 to a substantially constant vertical height section, and further taper outboard of the substantially constant vertical height section.

A cross-sectional area of each void 123 in a plane normal to the longitudinal axis Y1 varies along the longitudinal axis Y1. In the illustrated embodiment, the cross-sectional area of each void 123 tapers in the direction away from the differential portion 102 (i.e. reduces with increasing distance along the longitudinal axis Y1 away from the differential portion 102). Advantageously, such a configuration reduces the internal volume of the axle housing 100, and thus may help to reduce the quantity of oil required to fill said void 123 to a suitable level to lubricate components of the axle 10 within the axle housing 100 (principally components of the differential 112).

As shown in Figure 2, a lower wall 160 of the tubular casing 121 of each leg portion 108 slopes downwardly in a direction D (represented by dashed arrows in Figure 2) towards the differential portion 102. Such sloping lower walls 160 help oil drain to the differential portion 102, in use. Advantageously, this helps maximise the oil that can be removed from the axle housing 100 via the differential portion 102 when the oil is changed, and thus helps prevent old used oil being retained within the leg portions 108, which may contaminate newly added oil, and result in an increase in wear of moving parts of the axle 10.

The lower wall 160 of each tubular casing 121 is non-parallel to an upper wall 162 thereof. In the illustrated embodiment, the upper wall 162 of each tubular casing 121 is substantially horizontal. Advantageously, this helps simplify mounting of the axle housing 100 to a vehicle.

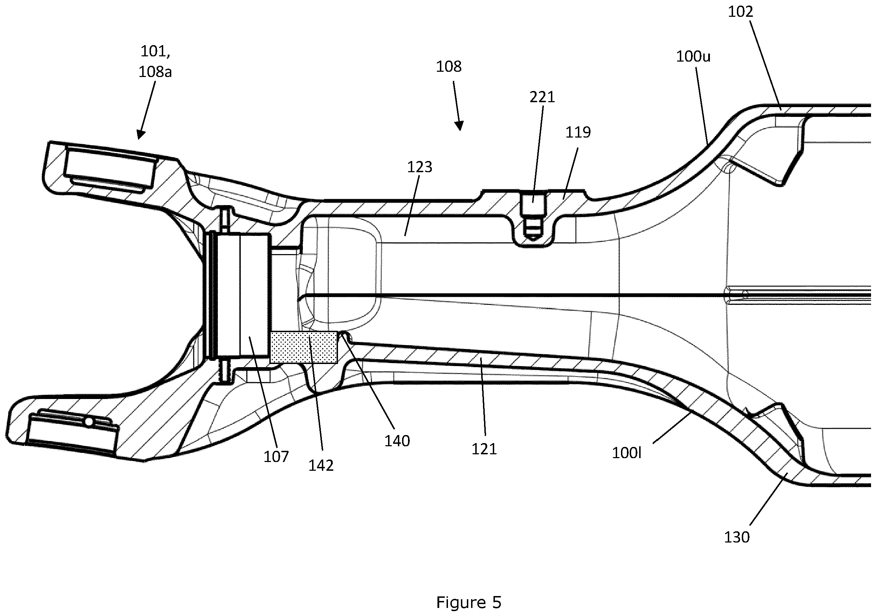

With reference to Figure 5, which shows a magnified view of the left-hand-side of the axle housing 100 shown in Figure 2, a lower side 100l of the tubular casing 121 of each leg portion 108 includes a dam wall 140 extending into the void 123. The dam wall 140 is arranged so as to retain oil 142 (represented by dotted shading in Figure 5) in the void 123 axially outboard of the dam wall 140. Advantageously, the dam wall 140 helps ensure a minimum level of oil is retained in an outboard section of the leg portion 108 where components requiring lubrication may be mounted, such as the bearing 107. In the illustrated embodiment, each dam wall 140 is adjacent the free end 108a of the leg portion 108.

With reference to Figure 4, each leg portion 108 has a profile with a substantially U-shaped internal lower surface 125, and a substantially w-shaped external lower surface 127. Such shaped leg portions 108 may be formed via a casting process. In alternative embodiments (not shown), each leg portion 108 may be formed from two or more pieces of material secured together (e.g. via welding). Each piece of material may be shaped via a stamping process. For example, each leg portion 108 may be formed from upper and lower stamped sections. In such embodiments, the ribs 114a-d may be formed via the stamping process, which may result in the internal and external lower surfaces 125, 127 having corresponding (e.g. W-shaped) profiles.

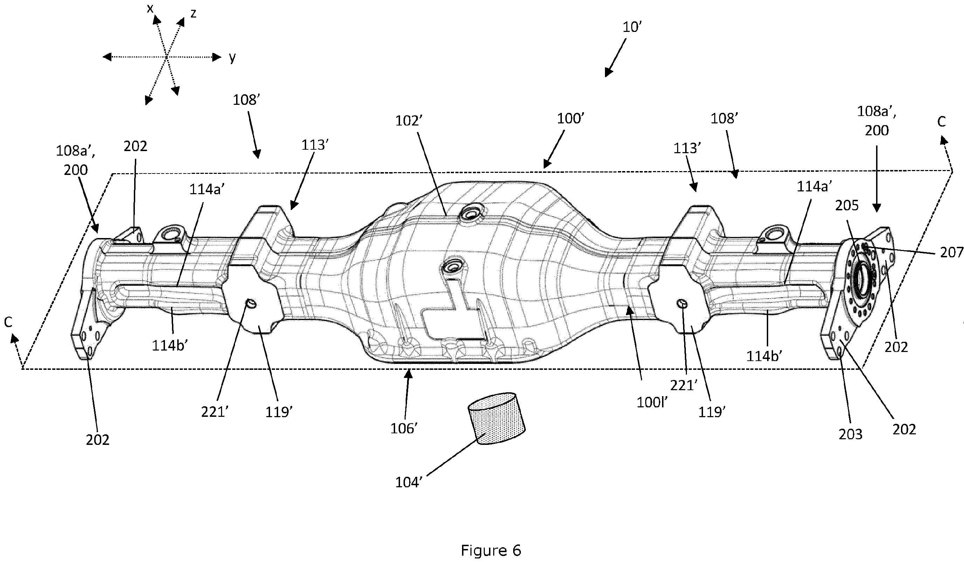

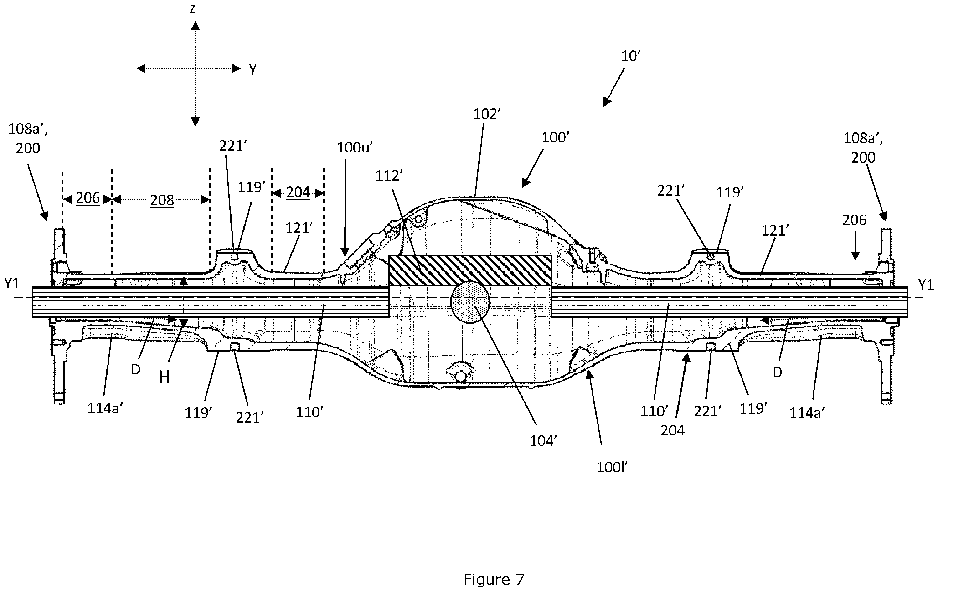

Figures 6 and 7 show an axle 10' according to a further embodiment. Figure 7 is a view along the section C-C shown in Figure 6. Features common with the axle 10 of Figures 1 to 5 share common reference numerals, with those of the further embodiment having a ' suffix, and a description of which shall not be repeated for brevity. Unless stated otherwise, the axle 10' of Figures 6 and 7 may share any of the features described above in relation to the axle 10 of Figures 1 to 5, and vice versa.

In contrast to the first embodiment, the axle 10' is a rigid drive axle. As such, the free ends 108a' of the leg portions 108' of the axle housing 100' include a mounting arrangement 200 for mounting a wheel end assembly (not shown) which is fixed relative to the axle housing 100'. In the illustrated embodiment, the mounting arrangement 200 includes a pair of flanges 202 projecting from the axle housing 100', having one or more holes 203 for receiving fasteners therein, for mounting a (e.g. disc or drum) brake assembly to the flange 220.

The axle housing 100 includes an opening 205 at each free end 108a' through which the drive shafts 110' protrude from the axle housing 100. The mounting arrangement 200 includes a plurality of holes 207 in the axle housing 100 spaced around each opening 205 for receiving fasteners therein, for mounting a wheel spindle to the axle housing 100.

In contrast to the first embodiment, each leg portion 108' does not include the web 134 since the torsional loading on the leg portions 108' is less relative to the drive steer axle of the first embodiment, for comparably sized axles. However, each leg portion 108' may include the web 134 in other embodiments.

In contrast to the first embodiment, the vehicle mounting arrangement 113' does not include the pair of mounting brackets 115 on each leg portion 108', but may do so in other embodiments, depending upon the suspension configuration required. The mounting arrangement 113' instead includes a pair of opposed mounting platforms 119' on upper and lower surfaces 100u', 100l' of each leg portion 108', for abutting against a vehicle (e.g. the suspension thereof) to which it is mounted. Each mounting platform 119' includes a hole 221' for receiving a fastener, for mounting the axle housing 100' to the vehicle. In the illustrated embodiment, the mounting platforms 119' are configured for mounting to a leaf spring type suspension of a vehicle, but may be configured for mounting to any suitable suspension in alternative embodiments (e.g. air suspension).

In contrast to the first embodiment, the ribs 114a, 114b do not extend a majority of the length of the respective leg portion 108', instead extending approximately 45% of the length. In some embodiments, the ribs 114a, 114b may extend at least 30% (e.g. at least 40%) of the length of the respective leg portion 108'.

Like the first embodiment, each leg portion 108' includes a tubular casing 121' having a profile with a vertical height H which tapers along the longitudinal axis Y1 in a direction away from the differential portion 102'. In contrast to the first embodiment, the tapering profile of each tubular casing 121' does not extend along a majority of a length of each leg portion 108'. Instead, each tapering profile extends along approximately 30% of the length of the respective leg portion 108'. In some embodiments, each tapering profile may extend 20% or more (e.g. 30% or more) the length of the respective leg portion 108'.

In the illustrated embodiment, an inboard section 204, and an outboard section 206 of each tubular casing 121' has a substantially constant height H. A section 208 of each tubular casing 121' interposed between the inboard and outboard sections 204, 206 includes the tapering profile. Each tapering profile section 208 is closer to the respective free end 108a' relative to the differential portion 102.

In contrast to the first embodiment, the axle housing 100' does not include bearings 107 at free ends of the leg portions 108'. As such, the axle housing 100' does not include the dam walls 140 of the first embodiment. In alternative embodiments (not shown), the axle housing 100' may include bearings 107 and/or dam walls 140 similar to the first embodiment.

## Claims

1. An axle housing comprising:
a differential portion configured to receive a differential; and
a pair of elongate leg portions extending from opposite sides of the differential portion,
wherein each leg portion comprises a free end configured for mounting a wheel end assembly to the axle housing,
wherein each leg portion is configured to house a drive shaft for transmitting torque from the differential to the wheel end assembly, and
wherein at least one of the leg portions comprises one or more ribs extending substantially parallel to a longitudinal axis of the leg portion.

2. The axle housing of claim 1, wherein the one or more ribs are arranged on a lower side of the leg portion, in an intended orientation of the axle housing for mounting to a vehicle.

3. The axle housing of claims 1 or 2, wherein said at least one leg portion comprises two or more ribs.

4. The axle housing of claim 3, wherein the two or more ribs are spaced apart along a fore-aft direction of the leg portion; optionally, wherein the two or more ribs are arranged side-by-side along said fore-aft direction.

5. The axle housing of claim 4, wherein said at least one leg portion comprises a web joining two of the ribs.

6. The axle housing of any preceding claim, wherein the one or more ribs extend along a majority or all of a length of the leg portion.

7. The axle housing of any preceding claim, wherein said at least one leg portion comprises a tubular casing defining a void for receiving the drive shaft therein.

8. The axle housing of claim 7, wherein the one or more ribs and said tubular casing are formed as a single monolithic piece of material (e.g. via a casting, forging, or stamping process).

9. The axle housing of claims 7 or 8, wherein a profile of the tubular casing has a height which tapers in a direction away from the differential portion, and wherein a height of at least one of the one or more ribs with respect to the tubular casing increases in said direction away from the differential portion; optionally, wherein said tapering profile extends along a majority or all of a length of the leg portion.

10. The axle housing of claim 9, wherein a cross-sectional area of the void tapers in the direction away from the differential portion.

11. The axle housing of any one of claims 7 to 10, wherein a lower wall of the tubular casing slopes downwardly in a direction towards the differential portion, in an intended orientation of the axle housing for mounting to a vehicle; optionally, wherein an upper wall of the tubular casing is non-parallel to said lower wall, for example, wherein said upper wall is substantially horizontal.

12. The axle housing of any one of claims 7 to 11, wherein a lower side of the tubular casing comprises a dam wall extending into the void for retaining oil in the void outboard of the dam wall, in an intended orientation of the axle housing for mounting to a vehicle; optionally, wherein said dam wall is adjacent the free end of the leg portion.

13. The axle housing of any preceding claim, wherein the one or more ribs are substantially symmetrical about a plane running parallel to the longitudinal axis of the leg portion; optionally, wherein said plane is substantially vertical, in an intended orientation of the axle housing for mounting to a vehicle

14. A method of manufacturing the axle housing of any preceding claim, wherein said at least one leg portion comprises a tubular casing defining a void for receiving the drive shaft therein, the method comprising:
forming the tubular casing and the one or more ribs as a single monolithic piece of material via a casting or stamping process.

15. An axle comprising the axle housing of any one of claims 1 to 13; optionally, wherein the axle is a drive steer axle or a rigid drive axle.
